# EUROPEAN PATENT APPLICATION

(11) **EP 2 849 058 A1**
(43) Date of publication of application: **18.03.2015**
(21) Application number: 13306270.3
(22) Date of filing: 17.09.2013
(51) Int. Cl.: G06F 9/44

(54) **Method and device for displaying a message associated with an application**

(71) Applicant: ALCATEL LUCENT, 92100 Boulogne-Billancourt (FR)
(72) Inventor: Cesar, Bozo, 70435 Stuttgart (DE); Braun, Volker, 70435 Stuttgart (DE)
(74) Representative: ALU Antw Patent Attorneys

(57) **Abstract**

Embodiments relates to a method for displaying a message (MSG) associated with an application (Aᵢ), executed by a displaying device (1) comprising a processor (2) and a memory (3), said memory comprising a plurality of applications (Aᵢ), an editing module (6) and a displaying module (5) distinct from said applications (Aᵢ), the method comprising:
- obtaining (S1), by said editing module (6), a message (MSG) input by a user,
- storing (S2), by said editing module (6), said message in said memory (3) in association with one of the applications (Aᵢ),
- detecting (T1), by the displaying module (5), a predetermined user interaction with one of said applications (Aᵢ),
- in response to said predetermined user interaction, determining (T3), by the displaying module (5), whether the memory (3) comprises at least one message (MSG) associated with said application (Aᵢ), and
- if at least one message (MSG) is associated with said application (Aᵢ), displaying (T5, T7) said message (MSG).

## Description

### FIELD OF THE INVENTION

The present invention relates to the field of interactive devices such as personal computers. In particular, the present invention relates to a method and a device for displaying a message associated to an application.

### BACKGROUND

Applications for personal computers and other user terminals (such as smartphone, tablet...) may have a lot of functions which can be selected through huge nested menus. Finding a specific function may be difficult for the user. Some applications include a "Tip of the Day" functionality which displays a tip, for example regarding how to access a specific function, at startup of the application or on request of the user. However, the displayed tips are preconfigured by the application developer and may not reflect the need of a particular user. Moreover, no help at all is provided for applications which do not include such "Tip of the Day" functionality.

### SUMMARY

It is thus an object of embodiments of the present invention to propose a method and a device for displaying a message associated with an application, which do not show the inherent shortcomings of the prior art.

Accordingly, embodiments relate to a method for displaying a message associated with an application, executed by a displaying device comprising a processor and a memory, said memory comprising a plurality of applications, an editing module and a displaying module distinct from said applications, the method comprising:
- obtaining, by said editing module, a message input by a user,
- storing, by said editing module, said message in said memory in association with one of the applications,
- detecting, by the displaying module, a predetermined user interaction with one of said applications,
- in response to said predetermined user interaction, determining, by the displaying module, whether the memory comprises at least one message associated with said application, and
- if at least one message is associated with said application, displaying said message.

Correlatively, embodiments relate to a displaying device for a message associated with an application, comprising a processor and a memory, said memory comprising a plurality of applications, an editing module and a displaying module distinct from said applications,
wherein the editing module is configured for:
- obtaining a message input by a user,
- storing said message in said memory in association with one of the applications, and wherein the displaying module is configured for:
- detecting a predetermined user interaction with one of said applications,
- in response to said predetermined user interaction, determining whether the memory comprises at least one message associated with said application, and
- if at least one message is associated with said application, displaying said message.

In one embodiment, the memory comprises an operating system and said displaying module is included in the operating system. The editing module may also be included in the operating system.

The predetermined user interaction may include at least one of launching an application, placing a pointer on an icon of an application, clicking on an icon of an application, pressing on an icon of an application for a predetermined duration, performing a predetermined gesture and using a predetermined voice command.

Displaying said message may comprise displaying a contextual menu which includes said message. Displaying said message may also comprise opening a message display window and displaying said message in said message display window. The contextual menu or the message display window may allow the user to input commands, said commands including a command for editing the message(s) associated with an application. The message may have a property and, depending on said property, said message may be displayed in said message display window or said contextual menu in response to a user command.

The message may be displayed according to a property.

Embodiments also relate to a computer program including instructions adapted to perform said method for displaying a message when said program is executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 shows a device for displaying a message,
Figure 2 is a flowchart of part of a method for displaying a message, and
Figure 3 is a flowchart of another part of a method for displaying a message.

### DESCRIPTION OF EMBODIMENTS

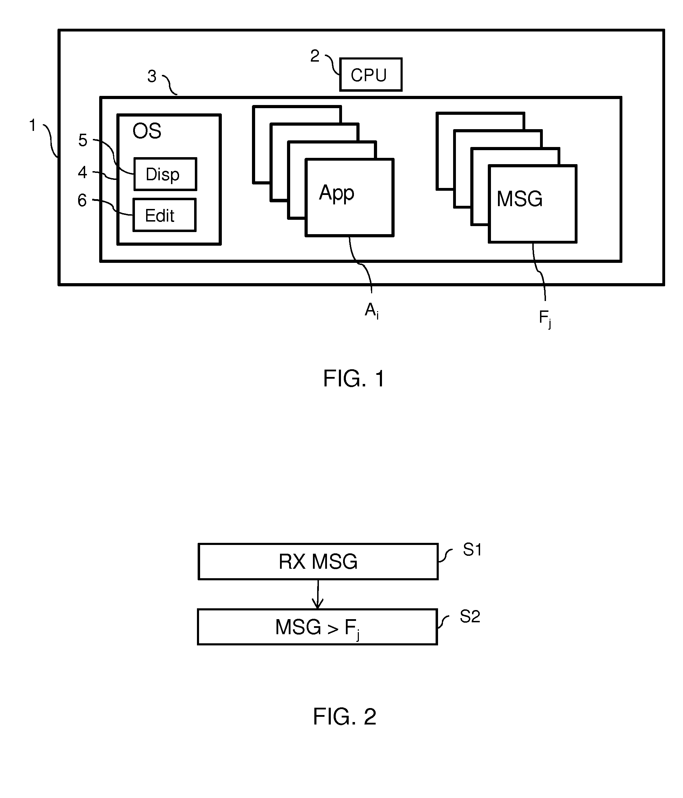

**Figure 1** shows a user device 1, which is for example a personal computer, a smartphone, a tablet... The user device 1 has the material architecture of a computer and comprises a processor 2 and a memory 3. The processor 2 is capable of executing computer program stored in the memory 3. The user device 1 also comprises a user I/O interface (not shown) which comprises for example a screen, a keyboard, a mouse, a touchpad, a touch screen, a video camera, a microphone,...

The memory 3 stores an operating system 4 (OS), a plurality of applications Aᵢ (App), with i ranging from 1 to m, user note files Fⱼ associated with respective applications Aᵢ, with j ranging from 1 to n, a displaying module 5 (Disp) and an editing module 6 (Edit).

The operating system 4 is a collection of computer program (i.e. instructions executable by the processor 2) and data that manages computer hardware resources of the user device 1 and provides common services for the applications Aᵢ.

An application Aᵢ is a computer program for performing determined operations, for example under control of the user. Examples of applications Aᵢ comprise a messaging application, an Internet browsing application, a document editing application...

A user note file Fⱼ is associated with an application Aᵢ. The association between a user note file Fⱼ and an application Aᵢ may be implemented in various manners. For example:
- The name of the user note file Fⱼ associated with the application Aᵢ can be defined during installation of the application.
- The user note file Fⱼ may be located in the same location as the application Aᵢ.
- The location of the user note file Fⱼ associated with the application Aᵢ can be defined during installation of the application.
- The location of the user note file Fⱼ associated with the application Aᵢ can be defined by the operating system 4.

The user note file Fⱼ comprise at least one message MSG related to the associated application Aᵢ. The message MSG is a personal note of the user, which the user may find helpful when using the application Aᵢ. Example of messages MSG may include:
- *"This program does not work with the build in SD-card reader, please use an external SD-card reader."*
- *"Take care that the computer is connected to power supply before starting the simulation!"*
- *"For good tips how to play this game see www.games..."*
- *"To reduce the red-eye effect go into menu: tools* -> *corrections -*> *filter -*> *red-eye effect "*

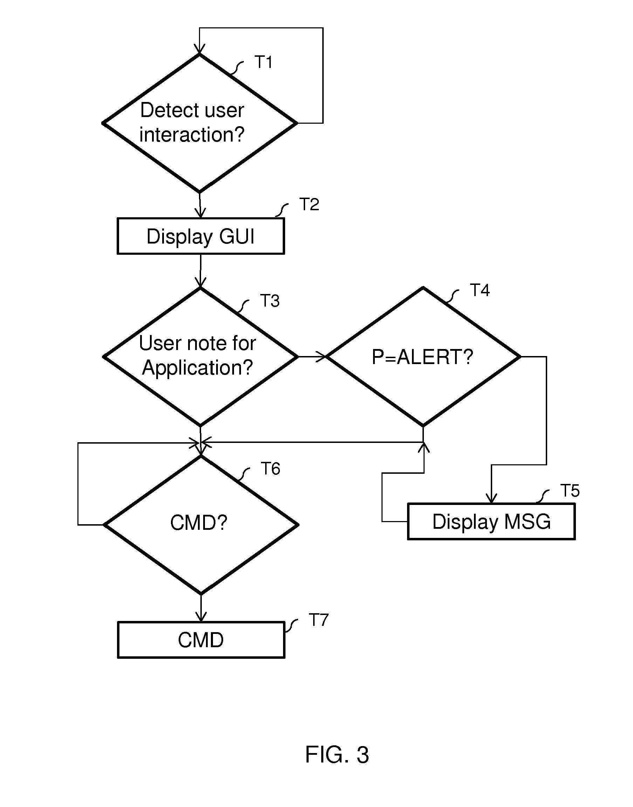

The user note file Fⱼ may also comprises one or more properties P for a message MSG. A property P defines how and/or when a message MSG should be displayed by the displaying module 5, as explained hereafter with reference to figure 3. For example, a message MSG may have a property P which may take one of the following values:
ALERT: display this message MSG at each app start or when placing a pointer on an icon of an application
NORMAL: display this message MSG on request of the user only

The user note file Fⱼ may be for example a simple unstructured text file containing one or more messages MSG, a structured text file where each message MSG is characterized by a keyword which defines a property for the message MSG, a structured (binary) file (for example a XML file) where each note is characterized by a property,...

The editing module 6 is a document editing computer program. It may be part of the operating system 4 as shown in the example of Figure 1. It may also be part of the displaying module 5, or be a separate application Aᵢ. By using the editing module 6, the user may edit a user note file Fⱼ for adding or modifying messages MSG. As shown on the flowchart of **Figure 2** which shows operations of the user device 1 when the processor 2 executes the editing module 6, the editing module 6 obtains a message MSG input by the user (step S1), and stores the obtained message MSG in a user note file Fⱼ in the memory 3 (step S2). Consequently, the user note file Fⱼ comprises a message MSG entered by the user. The case may be, the editing module 6 may also obtain a property P input by the user for the message MSG and store it in the user note file Fⱼ.

The displaying module 5 is a computer program in charge of displaying the messages MSG associated with the application Aᵢ. The displaying module 5 is distinct from the applications Aᵢ, for example it is a part of the operating system 4 as shown on figure 1. Accordingly, an application Aᵢ can be installed, modified, or removed without affecting the displaying module 5. Also, an application Aᵢ could be executed even in the absence of the displaying module 5.

**Figure 3** is a flowchart of operations of the user device 1 when the processor 2 executes the displaying module 5.

At step T1, the displaying module 5 monitors the user interactions with the applications Aᵢ. When a predetermined user interaction is detected, the displaying module 5 proceeds to step T2.

The predetermined user interaction may be for example:
- launching the execution of the application Aᵢ,
- placing a pointer (for example with a mouse or a touchpad) over an icon of the application Aᵢ,
- clicking (for example with a left mouse button) on an icon of the application Aᵢ,
- pressing (with a touchscreen) for a predetermined duration on an icon of the application Aᵢ,
- performing a predefined gesture capture by the video camera,
- using a predefined voice command,
- ...

In response to the detection of the user interaction at step T1, the displaying module 5 opens a graphical user interface element GUI for displaying messages (step T2) and determines whether at least one message MSG is associated with the application Aᵢ (step T3).

The graphical user interface element GUI may be for example a contextual menu (for example when clicking with a right-mouse button on an icon) or a window, and allows the user to enter commands, for example by clicking on buttons or sub-menus.

Determining whether at least one message MSG is associated with the application Aᵢ may be performed by checking whether the memory 3 includes a user note file Fⱼ associated with the application Aᵢ, for example a user note file Fⱼ which as the same name as the application Aᵢ and a specific extension.

In case at least one message is associated with the application Aᵢ, the displaying module 5 determines whether a property P of said message MSG is P=ALERT (step T4). In the affirmative, the displaying module 5 displays the message MSG in the graphical user interface element GUI (step T5). For example, the message MSG is included in the contextual menu which is displayed in response to a left-click on the icon of the application, or the message MSG is displayed in the window. In an alternative embodiment, the message MSG is displayed directly after step T3, regardless of the properties P. The properties P may also specify how the message MSG is displayed, for example regarding size, color...

After step T3, T4 or T5 (depending of the existence of a message MSG and the property P), the displaying module 5 monitors the commands CMD input by the user, using the graphical user interface GUI (step T6), and execute the input commands CMD (step T7).

A command may include:
- Displaying the message(s) MSG with the property P=NORMAL.
- Editing the messages MSG associated with the application. This can be done by opening the user note file Fᵢ with the editing module 6. Editing may include modifying existing messages, adding messages and deleting messages and the corresponding properties.
- Closing the graphical user interface GUI.

The displaying module 5 allows displaying user notes useful for using the applications Aᵢ. Since the displaying module 5 is independent of the applications Aᵢ, user notes (messages MSG) may be displayed for any application, even if no message displaying function is provided by the application itself. Moreover, the displayed message are input by the user and therefore adapted to the needs of the user.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for displaying a message (MSG) associated with an application (Aᵢ), executed by a displaying device (1) comprising a processor (2) and a memory (3), said memory comprising a plurality of applications (Aᵢ), an editing module (6) and a displaying module (5) distinct from said applications (Aᵢ), the method comprising:
- obtaining (S1), by said editing module (6), a message (MSG) input by a user,
- storing (S2), by said editing module (6), said message in said memory (3) in association with one of the applications (Aᵢ),
- detecting (T1), by the displaying module (5), a predetermined user interaction with one of said applications (Aᵢ),
- in response to said predetermined user interaction, determining (T3), by the displaying module (5), whether the memory (3) comprises at least one message (MSG) associated with said application (Aᵢ), and
- if at least one message (MSG) is associated with said application (Aᵢ), displaying (T5, T7) said message (MSG).

2. Method according to claim 1, wherein said memory comprises an operating system (4) and said displaying module (5) is included in the operating system (4).

3. Method according to claim 2, wherein said editing module (6) is included in the operating system (4).

4. Method according to one of claims 1 to 3, wherein said predetermined user interaction includes at least one of launching an application, placing a pointer on an icon of an application, clicking on an icon of an application, pressing on an icon of an application for a predetermined duration, performing a predetermined gesture and using a predetermined voice command.

5. Method according to one of claims 1 to 4, wherein displaying said message comprises displaying a contextual menu which includes said message.

6. Method according to one of claims 1 to 5, wherein displaying said message comprises opening a message display window and displaying said message in said message display window.

7. Method according to one of claims 5 and 6, wherein the contextual menu or the message display window allow the user to input commands, said commands including a command for editing the message(s) associated with an application (Aᵢ).

8. Method according to claim 7, wherein the message has a property and, depending on said property, said message is displayed in said message display window or in said contextual menu in response to a user command.

9. Method according to one of claims 1 to 8, wherein the message has a property, and the message is displayed according to said property.

10. Computer program (5, 6) including instructions adapted to perform the method according to one of claims 1 to 9 when said program is executed by a computer (1).

11. Displaying device (1) for a message associated with an application, comprising a processor (2) and a memory (3), said memory comprising a plurality of applications (Aᵢ), an editing module (6) and a displaying module (5) distinct from said applications,
wherein the editing module is configured for:
- obtaining a message input by a user,
- storing said message in said memory in association with one of the applications, and wherein the displaying module is configured for:
- detecting a predetermined user interaction with one of said applications,
- in response to said predetermined user interaction, determining whether the memory comprises at least one message associated with said application, and
- if at least one message is associated with said application, displaying said message.
